# EUROPÄISCHE PATENTSCHRIFT

(11) **EP 3 196 171 B1**
(45) Veröffentlichungstag und Bekanntmachung des Hinweises auf die Patenterteilung: **05.12.2018**
(21) Anmeldenummer: 17151805.3
(22) Anmeldetag: 17.01.2017
(51) Int. Cl.: C03B 23/045

(54) **HERSTELLUNG VON PHARMAPACKMITTELN AUS GLASPRODUKTEN**
MANUFACTURE OF PHARMACEUTICAL PACKAGINGS MADE OF GLASS PRODUCTS
FABRICATION D'EMBALLAGES PHARMACEUTIQUES EN PRODUITS VERRIERS

(30) Priorität: 20.01.2016 DE 102016100923
(43) Veröffentlichungstag der Anmeldung: 26.07.2017
(73) Patentinhaber: Schott AG, 55122 Mainz (DE)
(72) Erfinder: Humbertjean, Alexander, 79189 Bad Krozingen (DE); Jud, Xaver, 9217 Neukirch a.d. Thur (CH); Fruhner, Oliver, 55118 Mainz (DE)
(74) Vertreter: Witte, Weller & Partner Patentanwälte mbB

(56) Entgegenhaltungen:
- EP-A2- 0 846 665
- WO-A1-00/09455
- US-A- 2 230 075
- US-A- 2 297 335
- US-A- 3 852 054
- US-A- 4 226 607
- US-A- 4 981 505
- US-A- 5 672 192

## Beschreibung

Die Erfindung betrifft eine Vorrichtung zur Herstellung von Pharmapackmitteln aus Glasprodukten.

Die Erfindung betrifft ferner eine Verwendung einer derartigen Vorrichtung zur Herstellung von Pharmapackmitteln aus Glasprodukten.

Bei der Heißformung von Glasprodukten, wie etwa Glasrohren, um Pharma-Packmittel wie Vials, Karpulen, Spritzen oder Ampullen herzustellen, werden häufig Rundläufer in der Heißformgebung eingesetzt. Hierbei werden die Rohre vertikal geladen, durch ein hohles Spannfutter geführt und hinter dem umzuformenden Bereich gespannt. Der umzuformende Bereich durchläuft getaktet oder kontinuierlich mehrere Brenner- und Formstationen. Nach einem Umlauf an der Muttermaschine erfolgt die Trennung vom Rohr und die Übergabe zur Bodenmaschine. Hier durchläuft das zweite Ende des Rohrsegmentes wieder verschieden Brenner- und Formstationen. Übliche Spannfutter sind darauf ausgelegt, die Glasrohre zu halten und zu führen.

Allerdings kommt es im Laufe der Zeit zu einer erheblichen Erwärmung der Spannfutter. An den diversen Brennerstationen können Flammen auf die Spannfutter schlagen und zu einer lokalen höheren thermischen Belastung (> 400°C) führen.

Gemäß der US 2 230 075 A ist ein Drehantrieb vorgesehen, an dem eine Glasrohr eingespannt wird, das bei rotierendem Antrieb mittels einer Flamme geformt wird, um eine Pharmaverpackung zu erzeugen. Zur Kühlung wird Druckluft aus einem Schlauch zugeführt.

Vor diesem Hintergrund liegt der Erfindung die Aufgabe zugrunde, eine Vorrichtung zur Herstellung von Pharma-Packmitteln aus Glasprodukten zu offenbaren, womit eine sichere und kostengünstige Herstellung durch eine Heißformgebung in einem rotierend angetriebenen Spannfutter gewährleistet ist.

Diese Aufgabe wird durch eine Vorrichtung gemäß Anspruch 1 gelöst.

Die Aufgabe der Erfindung wird auf diese Weise vollkommen gelöst.

Durch das passive Strömungsmittel wird während der Heißformgebung eine übermäßige Überhitzung des Spannfutters sicher vermieden. Gleichfalls kann das Strömungsmittel genutzt werden, um das Glasprodukt gezielt insbesondere in seinem Spannbereich zu kühlen, um so etwa unerwünschten Formänderungen des Glasproduktes während des Formgebungsprozesses entgegenzuwirken.

Die Ausgestaltung des Strömungsmittels selbst kann in vielfältiger Weise variieren, um je nach den lokalen Bedingungen eine optimierte Kühlung des Spannfutters zu gewährleisten. Grundsätzlich ist das Strömungsmittel "passiv", d.h. durch eine Rotation des Spannfutters wird der Kühleffekt erzeugt. Das Strömungsmittel kann am Spannfutter aufgenommen sein, oder das Spannfutter selbst kann als Strömungsmittel ausgestaltet sein, so dass durch die Rotation des Spannfutters ein Kühlungseffekt auftritt.

Zusätzlich wird das Spannfutter durch den Strömungseffekt sauber gehalten und etwaige Kondensate, die sich auf dem Spannfutter oder dem Glasprodukt absetzen, werden gleichfalls weitgehend entfernt.

Gemäß einer weiteren Ausgestaltung der Erfindung ist das Spannfutter an seiner Außenoberfläche als Strömungsmittel ausgebildet.

Auf diese Weise wird das Spannfutter selbst zur Kühlung genutzt.

Gemäß einer weiteren Ausgestaltung der Erfindung ist am Spannfutter eine strukturierte Oberfläche zur Erzeugung einer Gasströmung vorgesehen.

Dies ist eine Möglichkeit zur Erzeugung der Gasströmung.

Gemäß einer weiteren Ausgestaltung der Erfindung weist das Spannfutter einen Spannkopf auf, dessen Außenoberfläche mit Vorsprüngen versehen ist, die als Lüfterelemente ausgestaltet sind.

Auch auf diese Weise wird eine wirkungsvolle Kühlung ermöglicht.

Gemäß einer weiteren Ausgestaltung der Erfindung ist das Strömungsmittel am Spannfutter befestigt, insbesondere darauf aufgeschweißt oder in Ausnehmungen des Spannfutters, insbesondere in Schlitzen, vorzugsweise mittels Presspassungen befestigt.

Durch die Verwendung eines gesonderten Strömungsmittels, das am Spannfutter befestigt wird, ist eine besonders wirkungsvolle Kühlung ermöglicht.

Gemäß einer weiteren Ausgestaltung der Erfindung sind die Strömungsmittel als Leitbleche oder Stege am Spannfutter zur Erzeugung eines Gasstroms vorgesehen.

Hiermit kann eine wirkungsvolle Kühlung gewährleistet werden.

Gemäß einer weiteren Ausgestaltung der Erfindung sind die Leitbleche von außen von einer Umhüllung, vorzugsweise in Ringform, umschlossen.

Hierdurch kann ein besonderer Ansaugeffekt erzielt werden.

Gemäß einer weiteren Ausgestaltung der Erfindung weist das Strömungsmittel in Axialrichtung oder schräg dazu verlaufende Leitbleche auf.

Die Leitbleche können zumindest teilweise gerade sein, können jedoch auch zumindest teilweise gekrümmt sein.

Mit den verschiedenen Varianten lässt sich eine wirkungsvolle Kühlung gewährleisten.

Gemäß einer weiteren Ausgestaltung der Erfindung sind die Leitbleche auf einem zentralen Aufnahmekörper gehalten.

Hierdurch wird eine einfache Montage und Befestigung der Leitbleche gewährleistet.

Der Aufnahmekörper ist gemäß einer weiteren Ausgestaltung der Erfindung nach außen hin konisch zulaufend ausgebildet.

Auf diese Weise kann der Aufnahmekörper der Form des Spannfutters angepasst werden.

Gemäß einer weiteren Ausgestaltung der Erfindung besteht der Aufnahmekörper aus Stegen oder einem Blech, das vorzugsweise mit Ausnehmungen versehen ist.

Auf diese Weise kann gewährleistet werden, dass der Kühleffekt nicht nur außerhalb des Aufnahmekörpers erzielt wird, sondern dass auch in dem vom Aufnahmekörper umschlossenen Raum ein Kühleffekt wirkt.

Gemäß einer weiteren Ausgestaltung der Erfindung sind die Leitbleche in regelmäßigen Abständen zueinander versetzt angeordnet.

In einer alternativen Ausführung der Erfindung sind die Leitbleche schneckenförmig angeordnet.

Mit beiden Varianten lässt sich eine wirkungsvolle Kühlung gewährleisten.

Gemäß einer weiteren Ausgestaltung der Erfindung ist das Strömungsmittel zur Erzeugung eines Gasstroms ausgebildet, der zumindest teilweise auf ein im Spannfutter aufgenommenes Glasprodukt gerichtet wird.

Somit kann die am Spannfutter bewirkte Kühlung auch gezielt zur Kühlung des Glasproduktes insbesondere in seinem Spannbereich genutzt werden, um so etwa unerwünschten Formänderungen des Glasproduktes während des Formgebungsprozesses entgegenzuwirken.

Die Aufgabe der Erfindung wird ferner durch eine Verwendung gemäß Anspruch 18 gelöst.

Es versteht sich, dass die vorstehend genannten und die nachstehend noch zu erläuternden Merkmale der Erfindung nicht nur in der jeweils angegebenen Kombination sondern auch in anderen Kombinationen oder in Alleinstellung verwendbar sind, ohne den Rahmen der Erfindung zu verlassen. Weitere Merkmale und Vorteile der Erfindung ergeben sich aus der nachfolgenden Beschreibung bevorzugter Ausführungsbeispiel unter Bezugnahme auf die Zeichnungen. Es zeigen:
Fig. 1 eine vereinfachte teilweise geschnittene Darstellung einer erfindungsgemäßen Vorrichtung mit einem Drehantrieb mit einem Spannfutter;
Fig. 2a), b) einen Spannkopf eines Spannfutters, bei dem die Außenoberfläche als Strömungsmittel ausgebildet ist;
Fig. 3a) bis d) ein weiteres Strömungsmittel mit einer Mehrzahl von Leitblechen und
Fig. 4a) bis d) eine weitere Ausführungsform eines erfindungsgemäßen Strömungsmittels, bei dem die Leitbleche schneckenförmig angeordnet sind.

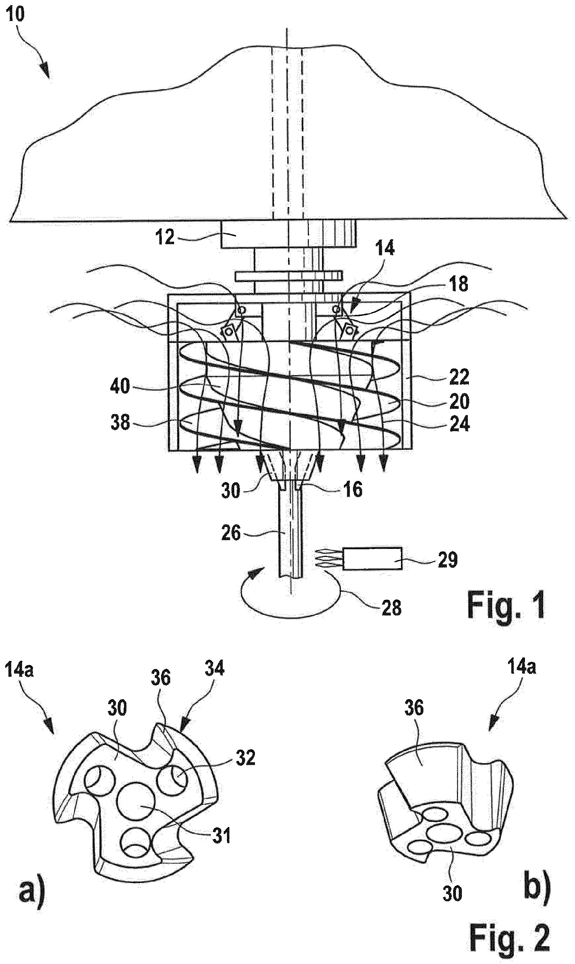

In Fig. 1 ist eine erste Ausführungsform einer erfindungsmäßen Vorrichtung insgesamt mit der Ziffer 10 bezeichnet.

Die Vorrichtung 10 umfasst ein Spannfutter 14, 14a zur Aufnahme von rohrförmigen Glasprodukten 26. Das Spannfutter 14, 14a weist ein Spanngestänge 18 auf, mit Hilfe dessen bei entsprechender Axialbewegung Spannmittel 16 in Form von Spannstangen durch zugeordnete Führungsöffnungen in einem Spannkopf 30 ausgefahren werden können, um ein rohrförmiges Glasprodukt 26 zu spannen.

Durch den Drehantrieb 12 wird das Spannfutter 14 mit dem Glasprodukt 26 rotierend angetrieben, wie durch den Pfeil 28 angedeutet ist.

Um eine Kühlung des Spannfutters 14 zu gewährleisten, ist am Spannfutter 14 ein insgesamt mit 20 bezeichnetes Strömungsmittel aufgenommen.

Es handelt sich hierbei um schneckenförmig angeordnete Leitbleche 38, die auf einem zentralen Aufnahmekörper 40 gehalten sind. Wird das Spannfutter 14 mittels des Drehantriebs 12 rotierend angetrieben, so wird durch die Leitbleche 38 ein Luftstrom erzeugt, der durch die Pfeile 24 angedeutet ist.

Zusätzlich können die Leitbleche 38 optional von einer vorzugsweise ringförmigen Umhüllung 22 umschlossen sein. Auf diese Weise kann ein Ansaugeffekt zwischen der Umhüllung 22 und den Leitblechen 38 erzeugt werden. Die Luftströmung ist insbesondere auf das äußere Ende des Spannfutters 14 im Bereich des Spannkopfes 30 gerichtet, an dem der stärkste Wärmeeintrag erfolgt.

Zusätzlich ist beispielhaft ein Brenner 29 angedeutet, mittels dessen das Glasprodukt 26 zur Heißformung auf eine Temperatur oberhalb seiner Erweichungstemperatur erwärmt wird, um dann einen Heißformprozess durchführen zu können.

In Fig. 2a), b) ist eine alternative Ausführung eines Spannfutters insgesamt mit 14a bezeichnet. Hierbei werden für entsprechende Teile entsprechende Bezugsziffern verwendet.

Hierbei ist nur der Spannkopf 30 erkennbar, in dem eine zentrale Ausnehmung 31 zur Durchführung des Glasproduktes 26 vorgesehen ist. Außen verlaufen im Spannkopf 30 drei Ausnehmungen 32, die als Führungsöffnungen für die Spannstangen 16 ausgebildet sind.

Im dargestellten Fall ist nun der Spannkopf 30 so ausgestaltet, dass seine Außenoberfläche schaufelartig ausgebildet ist, so dass insgesamt drei Lüfterelemente gebildet sind.

Durch die besondere Ausgestaltung der äußeren Form des Spannkopfes 30 ergibt sich somit ohne zusätzliche Leitbleche ein Luftstrom und damit ein Kühlungseffekt.

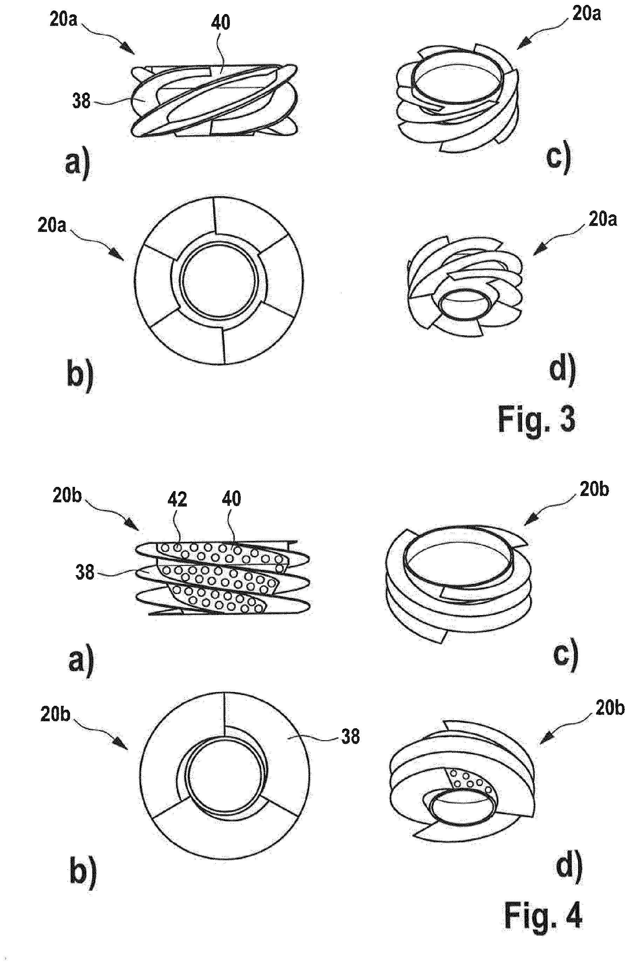

In den Fig. 3 und 4 sind weitere Ausführungsformen des erfindungsgemäßen Strömungsmittels beispielhaft dargestellt und mit 20a bzw. 20b bezeichnet. Wiederum werden für entsprechende Teile entsprechende Bezugsziffern verwendet.

In den Fig. 3a) bis d) ist ein Strömungsmittel 20a gezeigt, bei dem sich die Leitbleche 38 in gleichmäßigen Abständen zueinander versetzt entlang des Außenumfangs eines zentralen Aufnahmekörpers 40 erstrecken. Der zentrale Aufnahmekörper 40 verläuft hierbei nach außen hin konisch, so dass sich eine Anpassung der Form an die konische Form des Spannfutters 14 ergibt.

Auch mit einer derartigen Ausgestaltung lässt sich eine sehr wirkungsvolle Kühlung erreichen.

In den Fig. 4a) bis d) ist eine weitere Ausführungsform eines Strömungsmittels insgesamt mit 20b bezeichnet.

Diese Ausführungsform entspricht im Wesentlichen der Ausführungsform gemäß Fig. 1, jedoch ohne die Umhüllung 22. Außerdem ist der zentrale Aufnahmekörper 40 mit Ausnehmungen 42 versehen, etwa in Form eines gelochten Bleches. Durch diese Ausnehmungen 42 wird erreicht, dass sich die erzeugte Luftströmung nicht nur außerhalb des Aufnahmekörpers 40 auswirkt, sondern auch in dem vom Aufnahmekörper 40 umschlossenen Raum, so dass auch in diesem Bereich eine Kühlung des Spannfutters 14 erfolgt.

Alternativ könnte anstelle der Ausgestaltung des zentralen Aufnahmekörpers 40 mit einem gelochten Blech auch lediglich ein in Axialrichtung verlaufendes Gestänge mit mehreren Stegen vorgesehen sein, an den die Leitbleche 38 befestigt sind. Mit einer derartigen Ausgestaltung ergibt sich eine besonders wirkungsvolle Übertragung des erzeugten Luftstroms auch unmittelbar auf das Spannfutter 14.

## Patentansprüche

1. Vorrichtung zur Herstellung von Pharma-Packmitteln, mit einem Drehantrieb zum rotierenden Antrieb eines Spannfutters zum Spannen eines Glasproduktes (26) während einer Heißformgebung, **gekennzeichnet durch** ein passives Strömungsmittel (20, 20a, b) zum Erzeugen einer Gasströmung zur Kühlung des Spannfutters (14, 14a) bei rotierendem Antrieb des Spannfutters, wobei der Kühleffekt durch eine Rotation des Spannfutters (14, 14a) erzeugt wird, und wobei das Strömungsmittel (20, 20a, b) am Spannfutter (14, 14a) aufgenommen ist oder das Spannfutter (14, 14a) selbst als Strömungsmittel ausgebildet ist.

2. Vorrichtung nach Anspruch 1, **dadurch gekennzeichnet, dass** das Spannfutter (14a) an seiner Außenoberfläche als Strömungsmittel ausgebildet ist.

3. Vorrichtung nach Anspruch 2, **dadurch gekennzeichnet, dass** am Spannfutter (14a) eine strukturierte Oberfläche zur Erzeugung einer Gasströmung vorgesehen ist.

4. Vorrichtung nach Anspruch 3, **dadurch gekennzeichnet, dass** das Spannfutter einen Spannkopf (30) aufweist, dessen Außenoberfläche mit Vorsprüngen versehen ist, die als Lüfterelemente (36) ausgestaltet sind.

5. Vorrichtung nach einem der vorhergehenden Ansprüche, **dadurch gekennzeichnet, dass** das Strömungsmittel (20, 20a,b) am Spannfutter (14) befestigt ist, insbesondere darauf aufgeschweißt ist oder in Ausnehmungen des Spannfutters (14), insbesondere in Schlitzen, vorzugsweise mittels Presspassungen befestigt ist.

6. Vorrichtung nach einem der vorhergehenden Ansprüche, **dadurch gekennzeichnet, dass** das Strömungsmittel Leitbleche (38) oder Stege am Spannfutter (14) zur Erzeugung eines Gasstroms aufweist.

7. Vorrichtung nach Anspruch 6, **dadurch gekennzeichnet, dass** die Leitbleche (38) außen von einer Umhüllung (22), vorzugsweise in Ringform, umschlossen sind.

8. Vorrichtung nach einem der vorhergehenden Ansprüche, **dadurch gekennzeichnet, dass** das Strömungsmittel (20, 20a,b) in Axialrichtung oder schräg dazu verlaufende Leitbleche (38) aufweist.

9. Vorrichtung nach Anspruch 8, **dadurch gekennzeichnet, dass** die Leitbleche (38) zumindest teilweise gerade sind.

10. Vorrichtung nach Anspruch 8 oder 9, **dadurch gekennzeichnet, dass** die Leitbleche (38) zumindest teilweise gekrümmt sind.

11. Vorrichtung nach einem der Ansprüche 8 bis 10, **dadurch gekennzeichnet, dass** die Leitbleche (38) auf einem zentralen Aufnahmekörper (40) gehalten sind.

12. Vorrichtung nach Anspruch 11, **dadurch gekennzeichnet, dass** der Aufnahmekörper (40) nach außen hin konisch zuläuft.

13. Vorrichtung nach Anspruch 11 oder 12, **dadurch gekennzeichnet, dass** der Aufnahmekörper (40) mit Öffnungen (42) versehen ist, insbesondere aus einem Blech besteht, das mit Ausnehmungen (42) versehen ist, oder aus Stegen besteht, an denen die Leitbleche (38) gehalten sind.

14. Vorrichtung nach einem der Ansprüche 4 bis 13, **dadurch gekennzeichnet, dass** die Leitbleche (38) in regelmäßigen Abständen zueinander versetzt angeordnet sind.

15. Vorrichtung nach einem der Ansprüche 4 bis 14, **dadurch gekennzeichnet, dass** die Leitbleche (38) schneckenförmig angeordnet sind.

16. Vorrichtung nach einem der vorhergehenden Ansprüche, **dadurch gekennzeichnet, dass** das Strömungsmittel (20, 20a,b) zur Erzeugung eines Gasstroms ausgebildet ist, der zumindest teilweise auf ein im Spannfutter (14, 14a) aufgenommenes Glasprodukt (26) gerichtet ist.

17. Vorrichtung zur Halterung von Glasprodukten (26) bei der Heißformgebung, mit einem Drehantrieb (12), an dem ein Spannfutter (14, 14a) gemäß einem der vorhergehenden Ansprüche aufgenommen ist.

18. Verwendung einer Vorrichtung gemäß einem der vorhergehenden Ansprüche zum Herstellen eines Pharma-Packmittels durch Heißformen eines Glaskörpers (26), wobei der Glaskörper (26) in einem Spannfutter (14, 14a) eingespannt wird, rotierend angetrieben und mit Wärme beaufschlagt wird, bis das Glasprodukt (26) auf eine Temperatur oberhalb seiner Erweichungstemperatur erhitzt ist und verformt wird, wobei das Spannfutter (14, 14a) und/oder das Glasprodukt (26) durch ein passives Strömungsmittel (20, 20a,b) gekühlt wird, das am Spannfutter (14, 14a) vorgesehen ist oder das Spannfutter (14, 14a) selbst als Strömungsmittel zur Erzeugung einer Gasströmung zur Kühlung des Spannfuters (14, 14a) ausgebildet ist.

## Claims

1. Device for producing pharmaceutical packaging means, comprising a rotary drive for rotatingly driving a clamping chuck for clamping a glass product (26) during a hot-forming process, **characterized by** a passive current means (20, 20a, b) for generating a gas current for cooling the clamping chuck (14, 14a) when the clamping chuck is rotatingly driven, wherein the cooling effect is generated by rotating of the clamping chuck (14, 14a), and wherein the current means (20, 20a, b) is supported on the clamping chuck (14, 14a), or wherein the clamping chuck (14, 14a) itself is configured as the current means.

2. Clamping chuck of claim 1, **characterized in that** the clamping chuck (14a) at its outer surface is configured as a current means.

3. Clamping chuck of claim 2, **characterized in that** at the clamping chuck (14a) there is provided a structured surface for generating a gas current.

4. Clamping chuck of claim 3, **characterized in that** the clamping chuck comprises a clamping head (30) the outer surface of which is provided with protrusions that are configured as fan elements (36).

5. Clamping chuck of any of the preceding claims, **characterized in that** the current means (20, 20a, b) is secured at the clamping chuck (14), in particular is welded thereon, or is secured in recesses of the clamping chuck (14), in particular in slots, preferably by means of press-fitting.

6. Clamping chuck of any of the preceding claims, **characterized in that** the current means comprises a plurality of baffle plates (38) or ridges at the clamping chuck (14) for generating a gas current.

7. Clamping chuck of claim 6, **characterized in that** the baffle plates (38) are enclosed from the outside by an enclosure (22), preferably being of an annular shape.

8. Clamping chuck of any of the preceding claims, **characterized in that** the current means (20, 20a, b) comprises baffle plates extending in axial direction or at an angle thereto.

9. Clamping chuck of claim 8, **characterized in that** the baffle plates (38) are at least partially straight.

10. Clamping chuck of claim 8 or 9, **characterized in that** the baffle plates (38) are at least partially curved.

11. Clamping chuck of any of claims 8 to 10, **characterized in that** the baffle plates (38) are held on a central support body (40).

12. The clamping chuck of claim 11, **characterized in that** the support body (40) tapers conically to the outside.

13. Clamping chuck of claim 11 or 12, **characterized in that** the support body (40) is provided with openings (42), in particular consists of a sheet provided with recesses (42) or consists of ridges whereon baffle plates (38) are secured.

14. Clamping chuck of any of claims 4 to 13, **characterized in that** the baffle plates (38) are arranged at regular intervals displaced with respect to each other.

15. Clamping chuck of any of claims 4 to 14, **characterized in that** the baffle plates (38) are arranged helically.

16. Clamping chuck of any of the preceding claims, **characterized in that** the current means (20, 20a, b) is configured for generating a gas current that is at least partially directed onto a glass product (26) received within the clamping chuck (14, 14a).

17. Device for clamping glass products (26) during hot-forming, comprising a rotary drive (12), whereon a clamping chuck (14, 14a) according to any of the preceding claims is supported.

18. Use of a device according to any of the preceding claims for producing a pharmaceutical packaging means by hot-forming a glass-body (26), wherein the glass-body (26) is clamped within a clamping chuck (14, 14a), is rotatingly driven and subjected to heating, until the glass-product (26) is heated to a temperature above its softening temperature and is deformed, wherein the clamping chuck (14, 14a) and/or the glass product (26) is cooled by a passive current means (20, 20a, b) that is supported on the clamping chuck (14, 14a), or wherein the clamping chuck (14, 14a) itself is configured as a current means for generating a gas current for cooling the clamping chuck (14, 14a).

## Revendications

1. Ensemble de fabrication de moyens d'emballage pharmaceutique, l'ensemble présentant un entraînement en rotation qui permet d'entraîner en rotation un mandrin de serrage qui serre un produit de verre (26) pendant un façonnage à chaud,
**caractérisé par**
un moyen passif d'écoulement (20, 20a, b) qui forme un écoulement de gaz qui refroidit le mandrin de serrage (14, 14a) lorsque le mandrin de serrage est entraîné en rotation, l'effet de refroidissement étant obtenu par rotation du mandrin de serrage (14, 14a), le moyen d'écoulement (20, 20a, b) étant repris sur le mandrin de serrage (14, 14a) ou le mandrin de serrage (14, 14a) étant lui-même configuré comme moyen d'écoulement.

2. Ensemble selon la revendication 1, **caractérisé en ce que** le mandrin de serrage (14a) est configuré comme moyen d'écoulement sur sa surface extérieure.

3. Ensemble selon la revendication 2, **caractérisé en ce qu'**une surface structurée qui forme un écoulement de gaz est prévue sur le mandrin de serrage (14a).

4. Ensemble selon la revendication 3, **caractérisé en ce que** le mandrin de serrage présente une tête de serrage (30) dont la surface extérieure est dotée de saillies configurées comme éléments (36) de ventilateur.

5. Ensemble selon l'une des revendications précédentes, **caractérisé en ce que** le moyen d'écoulement (20, 20a, b) est fixé sur le mandrin de serrage (14), en particulier y est soudé, ou est fixé dans des découpes et en particulier des fentes du mandrin de serrage (14), de préférence par ajustement en compression.

6. Ensemble selon l'une des revendications précédentes, **caractérisé en ce que** le moyen d'écoulement présente sur le mandrin de serrage (14) des tôles de guidage (38) ou des nervures permettant de former un écoulement de gaz.

7. Ensemble selon la revendication 6, **caractérisé en ce que** les tôles de guidage (38) sont entourées à l'extérieur par une enveloppe (22), de préférence de forme annulaire.

8. Ensemble selon l'une des revendications précédentes, **caractérisé en ce que** le moyen d'écoulement (20, 20a, b) présente des tôles de guidage (38) qui s'étendent en direction axiale ou obliquement par rapport à cette dernière.

9. Ensemble selon la revendication 8, **caractérisé en ce que** les tôles de guidage (38) sont au moins en partie rectilignes.

10. Ensemble selon les revendications 8 ou 9, **caractérisé en ce que** les tôles de guidage (38) sont incurvées au moins en partie.

11. Ensemble selon l'une des revendications 8 à 10, **caractérisé en ce que** les tôles de guidage (38) sont maintenues sur un corps central de réception (40).

12. Ensemble selon la revendication 11, **caractérisé en ce que** le corps central de réception (40) s'évase coniquement vers l'extérieur.

13. Ensemble selon les revendications 11 ou 12, **caractérisé en ce que** le corps central de réception (40) est doté d'ouvertures (42) et en particulier est constitué d'une tôle dotée de découpes (42) ou est constitué de nervures sur lesquelles sont maintenues les tôles de guidage (38).

14. Ensemble selon l'une des revendications 4 à 13, **caractérisé en ce que** les tôles de guidage (38) sont mutuellement décalées à des intervalles réguliers.

15. Ensemble selon l'une des revendications 4 à 14, **caractérisé en ce que** les tôles de guidage (38) sont disposés en forme d'hélice.

16. Ensemble selon l'une des revendications précédentes, **caractérisé en ce que** le moyen d'écoulement (20, 20a, b) est configuré pour former un écoulement de gaz qui est orienté au moins en partie sur un produit de verre (26) repris dans le mandrin de serrage (14, 14a).

17. Ensemble de maintien de produits de verre (26) lors d'un façonnage à chaud, l'ensemble présentant un entraînement en rotation (12) sur lequel est repris un mandrin de serrage (14, 14a) selon l'une des revendications précédentes.

18. Utilisation d'un dispositif selon l'une des revendications précédentes pour fabriquer un produit d'emballage pharmaceutique par façonnage à chaud d'un produit de verre (26), le produit de verre (26) étant serré dans un mandrin de serrage (14, 14a), entraîné en rotation et soumis à de la chaleur jusqu'à ce que le produit de verre (26) soit chauffé à une température supérieure à sa température d'amollissement et déformé, le mandrin de serrage (14, 14a) et/ou le produit de verre (26) étant refroidis par un moyen passif d'écoulement (20, 20a, b) prévu sur le mandrin de serrage (14, 14a) ou le mandrin de serrage (14, 14a) étant lui-même configuré comme moyen d'écoulement permettant de former un écoulement de gaz qui refroidit le mandrin de serrage (14, 14a).
